# EUROPÄISCHE PATENTANMELDUNG

(11) **EP 1 848 148 A1**
(43) Veröffentlichungstag der Anmeldung: **24.10.2007**
(21) Anmeldenummer: 07106039.6
(22) Anmeldetag: 12.04.2007
(51) Int. Cl.: H04L 12/16, H04N 1/32, G06Q 30/00

(54) **Verfahren zum Erzeugen von Nutzerprofilen sowie Verfahren zum Bereitstellen von Informationen über Objekte**

(30) Priorität: 21.04.2006 DE 102006018552
(71) Anmelder: Vodafone Holding GmbH, 40213 Düsseldorf (DE)
(72) Erfinder: Düsener, Mark, 80337 München (DE); Dr. Hertle, Jochen, 85521 Ottobrunn (DE)
(74) Vertreter: Müller, Thomas

(57) **Zusammenfassung**

Die Erfindung betrifft ein Verfahren zum Erzeugen von Nutzerprofilen anhand übertragener Bilddateien von Objekten, wobei die Nutzerprofile in einer Rechnereinheit eines Dienstanbieters abgespeichert werden, wobei das Verfahren durch folgende Schritte gekennzeichnet ist: a) in einem Registrierungsschritt wird für einen Nutzer in der Rechnereinheit des Dienstanbieters elektronisch ein Nutzerprofil mit zumindest nutzerspezifischen Identifikationsdaten erzeugt; b) mittels eines Endgeräts mit Kamerafunktion wird nutzerseitig elektronisch wenigstens eine Bilddatei wenigstens eines Objekts erzeugt und an die Rechnereinheit des Dienstanbieters übertragen; c) in der Rechnereinheit des Dienstanbieters wird die wenigstens eine Bilddatei zumindest zeitweilig mit dem Nutzerprofil des Nutzers verknüpft; d) mittels einer Bilderkennungseinrichtung, auf die die Rechnereinheit zugreift, wird die wenigstens eine Bilddatei auf ihren Inhalt analysiert; e) die analysierten Inhalte der wenigstens einen Bilddatei werden zumindest zeitweilig im Nutzerprofil abgespeichert. Ferner betrifft die Erfindung ein Verfahren zum elektronischen Bereitstellen von Informationen über Objekte basierend auf dem Verfahren zum Erzeugen von Nutzerprofilen anhand übertragener Bilddateien von Objekten.

## Beschreibung

Die vorliegende Erfindung betrifft zunächst ein Verfahren zum Erzeugen von Nutzerprofilen anhand übertragener Bilddateien von Objekten, wobei die Nutzerprofile in einer Rechnereinheit eines Dienstanbieters abgespeichert werden. Weiterhin betrifft die Erfindung ein Verfahren zum elektronischen Bereitstellen von Informationen über Objekte.

Verfahren zum elektronischen Bereitstellen von Objekten, insbesondere von Immobilien, sind aus dem allgemeinen Stand der Technik bereits bekannt. So ist beispielsweise möglich, in einem Internet basierten Online-Suchdienst nach bestimmten Objekten, beispielsweise Immobilienangeboten, zu suchen. Hierzu muss der Nutzer des Online-Suchdienstes zunächst ein Nutzerprofil erstellen, in dem er die ihn interessierenden Suchkriterien und Informations-Filtermerkmale spezifiziert. Bei der Erstellung des Nutzerprofils muss der Nutzer jedoch in der Regel eine vom Dienstanbieter vorgegebene Suchmaske ausfüllen, die häufig nur eine grobe Auswahl von Suchkriterien bereitstellt. Dieses ist jedoch nachteilig, da auf einen bestimmten Nutzer zugeschnittene Suchkriterien nicht berücksichtigt werden können.

Der vorliegenden Erfindung liegt daher die Aufgabe zugrunde, ein Verfahren zum Erzeugen von Nutzerprofilen bereitzustellen, bei dem es dem Nutzer ermöglicht wird, auf einfache und benutzerfreundliche Weise ein auf den Nutzer zugeschnittenes Nutzerprofil zu erstellen. Ferner soll es einem Dienstanbieter auf einfache Weise ermöglicht werden, auf einen Nutzer zugeschnittene Suchergebnisse generieren und dem Nutzer bereitstellen zu können.

Diese Aufgabe wird erfindungsgemäß gelöst durch ein Verfahren zum Erzeugen von Nutzerprofilen anhand übertragener Bilddateien von Objekten, wobei die Nutzerprofile in einer Rechnereinheit eines Dienstanbieters abgespeichert werden, mit den Merkmalen gemäß des unabhängigen Patentanspruchs 1 sowie durch ein Verfahren zum elektronischen Bereitstellen von Informationen über Objekte gemäß des unabhängigen Patentanspruchs 9. Weitere Vorteile, Merkmale, Details, Aspekte und Effekte der Erfindung ergeben sich aus den Unteransprüchen sowie der Beschreibung. Merkmale und Details, die im Zusammenhang mit dem erfindungsgemäßen Verfahren zum Erzeugen von Nutzerprofilen anhand übertragener Bilddateien von Objekten beschrieben sind, gelten dabei selbstverständlich auch im Zusammenhang mit dem erfindungsgemäßen Verfahren zum elektronischen Bereitstellen von Informationen über Objekte, und umgekehrt.

Unter einem Nutzerprofil wird im Lichte dieser Erfindung eine Zusammenstellung von nutzerspezifischen Daten bzw. Angaben verstanden. Nutzerspezifische Daten bzw. Angaben können dabei neben Angaben zu der Person selbst, wie beispielsweise Alter, Geschlecht, Familienstand, etc., Angaben über bestimmte Vorlieben des Nutzers oder Suchprofile sein. Suchprofile können dabei beispielsweise derartige Suchmerkmale sein, wie sie bei der Suche nach Kraftfahrzeugen, Immobilien oder auch Personen üblich sind. Unter einem Objekte werden im Licht dieser Erfindung neben materiellen und immateriellen Gütern, wie beispielsweise Kraftfahrzeugen oder Häusern, auch Lebewesen, wie Personen oder Tiere, verstanden.
Ein Dienstanbieter stellt Informationen über Objekte zum Abruf zur Verfügung. Der Abruf kann dabei entgeltlich oder unentgeltlich erfolgen. Als Dienstanbieter kommt insbesondere ein Online-Suchdienst nach bestimmten Objekten in Frage, wie beispielsweise ein Online-Immobiliensuchdienst. Ein Dienstanbieter weist eine Rechnereinheit in einem Kommunikationsnetz auf, die zur Speicherung von Daten, insbesondere von Nutzerprofilen, ausgebildet ist.

Die erfindungsgemäße Aufgabe wird durch ein Verfahren zum Erzeugen von Nutzerprofilen anhand übertragener Bilddateien von Objekten, wobei die Nutzerprofile in einer Rechnereinheit eines Dienstanbieters abgespeichert werden, gelöst, wobei das Verfahren durch folgende Schritte gekennzeichnet ist:
a) in einem Registrierungsschritt wird für einen Nutzer in der Rechnereinheit des Dienstanbieters elektronisch ein Nutzerprofil mit zumindest nutzerspezifischen Identifikationsdaten erzeugt;
b) mittels eines Endgeräts mit Kamerafunktion wird nutzerseitig elektronisch wenigstens eine Bilddatei wenigstens eines Objekts erzeugt und an die Rechnereinheit des Dienstanbieters übertragen;
c) in der Rechnereinheit des Dienstanbieters wird die wenigstens eine Bilddatei zumindest zeitweilig mit dem Nutzerprofil des Nutzers verknüpft;
d) mittels einer Bilderkennungseinrichtung, auf die die Rechnereinheit zugreift, wird die wenigstens eine Bilddatei auf ihren Inhalt analysiert;
e) die analysierten Inhalte der wenigstens einen Bilddatei werden zumindest zeitweilig im Nutzerprofil abgespeichert.

Durch ein derartiges Verfahren wird es einem Nutzer auf einfache und benutzerfreundliche Weise ermöglicht ein auf ihn zugeschnittenes Nutzerprofil zu erstellen.

Ein vorteilhafter Schritt des erfindungsgemäßen Verfahrens sieht vor, dass in einem Registrierungsschritt für einen Nutzer in der Rechnereinheit des Dienstanbieters elektronisch ein Nutzerprofil mit zumindest nutzerspezifischen Identifikationsdaten erzeugt wird. Zur Nutzung des Dienstes registriert sich der Nutzer zunächst bei dem Dienstanbieter. Hierzu gibt der Nutzer insbesondere Identifikationsdaten an, damit das Nutzerprofil eindeutig dem Nutzer zuordenbar ist. Die Identifikationsdaten können der Name, Adressinformation, Telefonnummern, etc. sein.
In einem zweiten Schritt, wird mittels eines Endgeräts mit Kamerafunktion nutzerseitig elektronisch wenigstens eine Bilddatei wenigstens eines Objekts erzeugt und an die Rechnereinheit des Dienstanbieters übertragen. Als Endgerät wird im Licht dieser Erfindung ein elektronisches Endgerät mit einer Kamera verstanden. Das elektronische Endgerät kann beispielsweise ein Mobiltelefon, ein PDA (PDA = persönlicher digitaler Assistent), ein Smartphone oder ein kleines Notebook sein. Insbesondere tragbare elektronische Kleingeräte, die neben der Kamerafunktionalität eine Eingabeeinrichtung, zur Eingabe von Daten, aufweisen, sind besonders geeignet als Endgerät. Als Kamera sind insbesondere Digitalkameras einsetzbar, durch die der Nutzer des Endgerätes elektronisch wenigstens eine Bilddatei wenigstens eines Objekts erzeugen kann. Nach Erzeugung einer Bilddatei, d.h. nach dem Fotografieren eines Objektes, wird diese an die Rechnereinheit des Dienstanbieters übertragen. Die Übertragung erfolgt dabei über eine Funkverbindung, insbesondere gemäß einer GSM- (GSM = Global System for Mobile Communications) oder UMTS-Funkverbindung (UMTS = Universal Mobile Telecommunications System).
In einem weiteren Schritt wird in der Rechnereinheit des Dienstanbieters die wenigstens eine Bilddatei zumindest zeitweilig mit dem Nutzerprofil des Nutzers verknüpft. Durch die Verknüpfung der wenigstens einen Bilddatei mit dem Nutzerprofil des Nutzers erfolgt eine eindeutige Zuordnung der von dem Nutzer erzeugten Bilder mit dem Nutzerprofil in der Rechnereinheit.
Mittels einer Bilderkennungseinrichtung, auf die die Rechnereinheit zugreift, wird die wenigstens eine übertragenen Bilddatei auf ihren Inhalt analysiert. Durch die Bilderkennungseinrichtung ist es möglich Einzelheiten oder Segmente des Bildes zu erkennen. Besonders vorteilhaft ist es, wenn die Analyse der Inhalte der wenigstens einen Bilddatei automatisch durch die Bilderkennungseinrichtung erfolgt, sobald die wenigstens eine Bilddatei zu der Rechnereinheit des Dienstanbieters übertragen worden ist.
Hierbei ist besonders vorteilhaft, wenn eine Bilddatei auf ihren Inhalt analysiert wird, indem mittels der Bilderkennungseinrichtung zumindest charakteristische Merkmale der Bilddatei abstrahiert werden. Die Bilderkennungseinrichtung extrahiert Merkmale von Objekten aus der Bilddatei. Die Merkmale beschreiben die Charakteristika der Objekte. Die Bilderkennungseinrichtung segmentiert das Bild der Bilddatei und ordnet den Segmenten des Bildes bestimmte Objekte zu. Um die Zuordnung zu realisieren können der Bilderkennungseinrichtung konkrete Abbildungen von Objekten vorliegen. Den durch die Segmentierung gefundenen Objekten der Bilddatei werden Bedeutungen zugewiesen. D.h., aus den Objekten werden Merkmale extrahiert, welche durch den Vergleich mit bekanntem Wissen klassifiziert und mit einer bestimmten Bedeutung versehen werden. Segmentierung bedeutet, das von dem Nutzer erzeugte Bild in sinnvolle Bildteile aufzuteilen. Hierzu existieren zahlreichen Arten der Segmentierung, wie beispielsweise das punktorientierte Segmentierungsverfahren, das kantenorientierte Segmentierungsverfahren oder das regionenorientierte Segmentierungsverfahren, auf die aber im Detail nicht weiter eingegangen wird, da sie hinlänglich bekannt sind.
In einem letzten Verfahrensschritt werden die analysierten Inhalte der wenigstens einen Bilddatei zumindest zeitweilig im Nutzerprofil des Nutzers abgespeichert. Hierdurch wird das Nutzerprofil eines Nutzers durch ganz spezifische Informationen, die durch die vom Nutzer gefertigten Bilder erzeugt werden, erweitert, auf die sowohl der Nutzer, als auch der Dienstanbieter zurückgreifen kann.

Durch ein derartiges Verfahren zum Erzeugen von Nutzerprofilen anhand übertragener Bilddateien von Objekten kann ein ganz spezifisches Nutzerprofil erzeugt werden. Ein Nutzer ist beispielsweise nicht mehr an eine bestimmte Suchmaske eines Dienstanbieters gebunden, bei der Suchkriterien vorgegeben sind. Diese vorgegebenen Suchkriterien sind recht allgemein, so dass eine den Wünschen des Nutzers entsprechende Suche oft gar nicht möglich ist. Aufgrund der bei dem vorliegenden Verfahren durchgeführten Bilderkennung können ganz individuelle Nutzerprofile erzeugt werden. Bei dem erfindungsgemäßen Verfahren werden die Suchkriterien den von dem Nutzer an die Rechnereinheit des Dienstanbieters übertragenen Bildern automatisch entnommen. Hierzu dient die Bilderkennungseinrichtung, die die auf den Bildern vorhandenen Objekte oder Teile des oder der Objekte(s) analysiert.
Dadurch, dass die Nutzerprofile zumindest zeitweilig in der Rechnereinheit gespeichert werden, können der Nutzer und der Dienstanbieter auf diese spezifischen Nutzerprofile zurückgreifen.

Sucht ein Nutzer beispielsweise eine Immobilie eines bestimmten Typs, so registriert sich der Nutzer zunächst bei einem Anbieter eines Immobiliensuchdienstes. Anstatt der mühsamen Eingabe bestimmter Suchkriterien, die auch meistens nicht detailliert genug ist, übermittelt der Nutzer der Rechnereinheit des Dienstanbieters Bilder von Objekten, die er zuvor mit einem elektronischen Endgerät mit einer Kamerafunktionalität erzeugt hat. Die der Rechnereinheit zugeordnete Bilderkennungsreinrichtung analysiert den Inhalt der übertragenen Bilder und erzeugt aufgrund der festgestellten Inhalte bestimmte Suchkriterien, die zusätzlich in dem Nutzerprofil des Nutzers gespeichert werden. Aufgrund dieses gespeicherten Nutzerprofils kann der Immobiliensuchdienst gezielt nach passenden Immobilien suchen, die den erzeugten Suchkriterien des Nutzerprofils entsprechen. Dabei kann das Nutzerprofil auch aus Mittelwerten oder Gemeinsamkeiten verschiedener Bilder erzeugt werden.

Bevorzugt ist ein Verfahren, bei dem nutzerseitig oder anbieterseitig zusätzliche nutzerspezifische Daten erzeugt werden, die dem Nutzerprofil hinzugefügt werden. Vorteilhaft ist hierbei, dass das anhand übertragener Bilddateien von Objekten erzeugte Nutzerprofil erweitert werden kann. Dies kann zum einen durch den Nutzer selbst erfolgen, wenn dieser beispielsweise weitere bestimmte Suchkriterien in dem Nutzerprofil haben möchte, die über die Bildinformationen der aufgenommenen Objekte hinausgehen. Die Erweiterung kann aber auch von Seiten des Dienstanbieters erfolgen, wenn dem Dienstanbieter weitere Suchkriterien des Nutzers vorliegen, die beispielsweise durch übertragene Bilddateien nicht ermittelt werden können. Die zusätzlichen nutzerspezifischen Daten können beispielsweise Ortsinformationen, Lageinformationen, markante Merkmale, etc. sein.

Bevorzugt ist ferner ein Verfahren, bei dem die zur Rechnereinheit des Dienstanbieters übertragene wenigstens eine Bilddatei mit Ortsinformationsdaten verknüpft wird. Hierdurch kann das Nutzerprofil zusätzlich durch das Suchkriterium "in welcher Umgebung..., in welchem Ortsteil..." ergänzt werden, wenn dies für die Suche von Bedeutung ist. Die Verknüpfung mit Ortsinformationsdaten kann in dem Endgerät des Nutzers oder in der Rechnereinheit des Dienstanbieters erfolgen.

Besonders bevorzugt ist ein Verfahren, bei dem nutzerseitig Ortsinformationsdaten erzeugt werden, bei dem die Ortsinformationsdaten nutzerseitig mit der Bilddatei verknüpft werden, und bei dem diese Daten an die Rechnereinheit des Dienstanbieters übertragen werden. Der Nutzer gibt zusätzlich zu der übertragenen Bilddatei an, wo er das Bild aufgenommen hat. Hierzu dient eine dem Endgerät zugeordnete Eingabeeinrichtung, wie eine Tastatur oder eine sprachbasierte Eingabeeinrichtung. Der Suchdienstanbieter erhält somit die zusätzliche Information, wo die Bilddatei aufgenommen worden ist. Dies kann, je nach Art des Suchdienstes, von großer Bedeutung sein. Beispielsweise bei der Immobiliensuche erkennt der Immobiliensuchdienstanbieter, in welcher Gegend der Nutzer des Suchdienstens interessante Objekte/Häuser gefunden hat. So kann er gezielt dem Nutzerprofil entsprechende Immobilien in dem Umfeld der Gegend, in der die Bilddatei erzeugt wurde, heraussuchen und dem Nutzer zur Verfügung stellen. Hierdurch wird vermieden, dass der Suchdienstanbieter zwar auf das Nutzerprofil zutreffende Immobilien findet, diese aber örtlich komplett woanders liegen, als vom Nutzer gewünscht.

Ein Verfahren, bei dem die Rechnereinheit des Dienstanbieters auf eine Einrichtung zur Positionsbestimmung zugreift und die Position des Endgeräts bestimmt, wenn die Bilddatei an die Rechnereinheit übertragen wird, ist einfach durchführbar und besonders effektiv bei der Erzeugung von eines Nutzerprofils. Dies ist insbesondere dann möglich, wenn der Dienstanbieter gleichzeitig auch Betreiber des Funknetzes ist, in dem kommuniziert wird. Besonders bevorzugt ist ein Verfahren, bei dem mittels eines Positionsbestimmungsverfahrens die Position des Nutzer-Endgeräts bestimmt wird, bei dem die Positionsdaten des Endgeräts mit der Bilddatei verknüpft werden, und bei dem diese Positionsdaten an die Rechnereinheit des Dienstanbieters übertragen werden. Erfolgt die Verknüpfung in dem Endgerät des Nutzers, weist dieses eine Einrichtung zur Bestimmung der Position des Endgerätes auf. Die Einrichtung zur Positionsbestimmung ermöglicht die genaue Ortsbestimmung des mobilen elektronischen Endgeräts des Nutzers. Die Position des mobilen elektronischen Endgerätes kann beispielsweise automatisch beim Erzeugen des Bildes ermittelt und mit der Bilddatei an die Rechnereinheit übertragen werden. So muss der Nutzer nicht zusätzlich den Ort, zu dem er beispielsweise Informationen erhalten möchte, mit angeben. Die Positionsdaten können von der Rechnereinheit übernommen werden, wodurch die Erzeugung des Nutzerprofils vereinfacht und verbessert werden kann. Die Einrichtung zur Positionsbestimmung kann beispielsweise als GPS-System (GPS = Global Positioning System) ausgebildet sein. Dieses Satellitenortungssystem besteht aus mehreren Satelliten, die gleichmäßig um die Erde verteilt angeordnet sind. Jeder Punkt der Erde hat Kontakt zu zumindest drei Satelliten, so dass eine Positionsbestimmung auf wenige Meter genau möglich ist. GPS-Satelliten senden ein Signal aus, das die genaue Ortsbestimmung eines GPS-Empfängers ermöglicht. Die Einrichtung zur Positionsbestimmung kann auch gemäß des Europäischen Satellitennavigationssystems GALILEO funktionieren.

Eine Verfahren, bei dem die auf die Rechnereinheit des Dienstanbieters übertragene wenigstens eine Bilddatei oder abstrahierte charakteristische Merkmale der Bilddatei in der Rechnereinheit mit Referenzbilddateien oder Referenzmerkmalen, die in der Rechnereinheit abgespeichert sind, verglichen wird/werden, ist besonders geeignet zur Erzeugung von Nutzerprofilen anhand übertragener Bilddateien von Objekten. Die Rechnereinheit weist hierzu ein Archiv mit Referenzbilddateien oder Referenzmerkmalen auf. Das Archiv ist jederzeit durch das Hinzufügen oder Entfernen von Referenzbilddateien oder Referenzmerkmalen veränderbar. Durch den Vergleich mit Referenzbilddateien oder Referenzmerkmalen ist die Erzeugung eines Nutzerprofils für den Dienstanbieter leichte durchführbar und das Nutzerprofil kann sehr individuell gestaltet werden. Ein Anbieter eines Immobiliensuchdienstes kann beispielsweise einfach die charakteristischen Merkmale eines Hauses, welche Inhalt der von dem Nutzer übertragenen Bilddatei sind, ermitteln und anhand dieser charakteristischen Merkmale in den Referenzbilddateien nach Entsprechungen suchen. Weist ein Haus einer übertragenen Bilddatei beispielsweise als charakteristisches Merkmal Säulen an dem Eingangsbereich des Hauses auf, so kann die Rechnereinheit in dem Archiv gezielt nach Häusern suchen, die Säulen im Eingangsbereich des Hauses aufweisen. Die Referenzbilddateien oder Referenzmerkmalen können unterschiedlich detaillierte Informationen beinhalten. Als Referenzbilddatei können beispielsweise bekannte Häuser dienen. Als Referenzmerkmal können beispielsweise aber auch Details eines Hauses, wie bestimmte Fenster- oder Türformen oder andere charakteristische Merkmale eines Hauses dienen.

Ferner ist ein Verfahren zur Erzeugen von Nutzerprofilen anhand übertragener Bilddateien von Objekten bevorzugt, bei dem die nutzerseitig mittels des Endgeräts erzeugte wenigstens eine Bilddatei bei deren Erzeugung zusätzlich durch eine im Endgerät implementierte Zeiterfassungseinrichtung mit einer Zeitmarke verknüpft wird und bei dem die mit der Zeitmarke verknüpfte Bilddatei an die Rechnereinheit des Dienstanbieters übertragen wird. Hierdurch lässt sich beispielsweise anhand des Nutzerprofils eine zeitliche Tendenz der Suchkriterien erstellen. So kann sich das Nutzerprofil über die Zeit verändern. Anhand der Zeitmarken, kann das Nutzerprofil ständig auf dem aktuellsten Stand gehalten werden. Ferner kann aufgrund der Zeitmarken herausgestellt werden, wann der Nutzer die Bilder erzeugt. Werden die Bilder abends oder am Wochenende erzeugt, spricht dies für einen berufstätigen Nutzer. Werden die Bilder tagsüber, unter der Woche gemacht, spricht dies nicht unbedingt für eine berufstätigen Nutzer. Diese Informationen können beispielsweise für die Kreditwürdigkeit eines Nutzers herangezogen werden. Durch das Versehen der Bilddateien mit Zeitmarken kann ein Verhaltensschema des Nutzers bestimmt werden. Handelt es sich bei dem Nutzer eher um einen nachtaktiven Menschen, oder eher um einen Wochenendtyp.

Von Vorteil ist des Weiteren ein Verfahren, bei dem das Endgerät als Mobiltelefon mit Kamerafunktion ausgebildet ist und dass die wenigstens eine Bilddatei in Form einer MMS (Multimedia Messaging Service) an die Rechnereinheit des Dienstanbieters übertragen wird. Mobiltelefone sind besonders gut geeignet zur Durchführung des Verfahrens, da unter anderem die Eingabe von nutzerspezifischen Informationsdaten sowie die Positionsbestimmung durch Mobiltelefone leicht durchführbar ist. Insbesondere die Positionsbestimmung eines Mobiltelefons kann einfach durch eine Einrichtung zur Positionsbestimmung in dem Mobiltelefon selbst, aber auch einfach durch eine der Rechnereinheit zugeordneten Einrichtung zur Positionsbestimmung erfolgen, wenn der Dienstanbieter gleichzeitig auch der Betreiber des Kommunikationsnetzes ist, in dem das Mobiletelefon registriert ist. Die Eingabe von nutzerspezifischen Informationsdaten kann mittels der bei einem Mobiltelefon standardmäßig vorhandenen Eingabeeinrichtung, wie der Tastatur, erfolgen.

Die Erfindung wird ferner durch ein Verfahren zum elektronischen Bereitstellen von Informationen über Objekte, welches durch die folgenden Schritte gekennzeichnet ist, gelöst:
a) ein Nutzerprofil wird durch ein zuvor beschriebenes erfindungsgemäßes Verfahren zum Erzeugen von Nutzerprofilen anhand übertragener Bilddateien von Objekten, wobei die Nutzerprofile in einer Rechnereinheit eines Dienstanbieters abgespeichert werden, erzeugt;
b) das erzeugte Nutzerprofil wird mit in einer Datenbank des Dienstanbieters abgelegten Objektinformationen verglichen;
c) Bei Übereinstimmung von in der Datenbank abgelegten Objektinformationen mit zumindest Bestandteilen des Nutzerprofils werden die übereinstimmenden Objektinformationen dem Nutzer verfügbar gemacht, gelöst.

Durch ein derartiges Verfahren ist es möglich einem Nutzer eines Suchdienstes gezielt Informationen über Objekte bereitzustellen. Zunächst erzeugt der Dienstanbieter anhand der übertragenen Bilddateien von Objekten ein individuelles Nutzerprofil. Hierdurch können Vorlieben und Eigenarten des Nutzers erkannt werden. Durch den Vergleich des erzeugten Nutzerprofils mit Objektinformationen, die in einer Datenbank des Dienstanbieters abgelegt sind, können entsprechend des Nutzerprofils gezielt Suchergebnisse ermittelt werden. Der Vergleich findet in einer der Rechnereinheit zugeordneten Komparatorenrichtung statt. Werden Übereinstimmungen von in der Datenbank abgelegten Objektinformationen mit zumindest Bestandteilen des Nutzerprofils festgestellt, so werden diese Übereinstimmungen dem Nutzer verfügbar gemacht. Dies kann dadurch erfolgen, dass die übereinstimmenden Objektinformationen für den Nutzer abrufbar oder einsehbar gemacht werden. Hierzu können die übereinstimmenden Objektinformationen in einer dem Nutzer zugänglichen Speichereinrichtung der Rechnereinheit des Dienstanbieters abgespeichert werden. Über eine entsprechende Schnittstelle und eine entsprechende Autorisierung kann der Nutzer die übereinstimmenden Objektinformationen einsehen.

Besonders vorteilhaft ist es, wenn die übereinstimmenden Objektinformationen dem Nutzer übertragen werden, so dass diese auf einer dem Endgerät des Nutzers zugeordneten Anzeigeeinrichtung, insbesondere auf einem Display, dargestellt werden können. Hierdurch erhält der Nutzer des Suchdienstes umgehend seinem Nutzerprofil entsprechende Suchergebnisse.

Die Erfindung stellt einen Mehrwert des MMS-Dienstes dar. Bilder, welche an einem speziellen Dienst, z.B. Bilder von Häusern, die den Nutzer des Dienstes interessieren, gesandt werden, werden mit den über das zuvor erwähnte Verfahren mit entstehenden Ortsinformationen verbunden, um daraus ein hochwertiges Nutzerprofil(Kundenprofil) zu kreieren. Die erfindungsgemäßen Verfahren sind besonders dann anwendbar, wenn sich Kundenwünsche bildlich und örtlich beschreiben lassen. Der Nutzer kann selber durch das "Schießen" eines Bildes und das Verschicken des Bildes an einen Dienstanbieter ein qualitativ hochwertiges Suchprofil erstellen.
Die Verfahren zeichnen sich durch eine hohe Benutzerfreundlichkeit aus. Der Nutzer muss keine langen und für ihn manchmal unklaren Fragebögen ausfüllen, um seine Bedürfnisse zu kategorisieren. Stattdessen entsteht das Nutzerprofil "automatisch".

Möchte ein Nutzer eines Endgerätes eine Immobilie kaufen, meldet er sich zunächst bei einem entsprechenden Immobiliensuchdienst an. Anschließend macht er von Gebäuden, die er grundsätzlich interessant findet Fotos und schickt diese per MMS an den Immobiliensuchdienst. Dieser kann nun aufgrund dieser Fotos ein Nutzerprofil anlegen, welche die Charakteristiken der fotografierten Gebäude beinhaltet und gleichzeitig die Gegenden, welche für den Nutzer interessant sind, sprich die Gegenden von denen er die Fotos geschickt hat, verzeichnet.

## Patentansprüche

1. Verfahren zum Erzeugen von Nutzerprofilen anhand übertragener Bilddateien von Objekten, wobei die Nutzerprofile in einer Rechnereinheit eines Dienstanbieters abgespeichert werden, **gekennzeichnet durch** folgende Schritte:
a) in einem Registrierungsschritt wird für einen Nutzer in der Rechnereinheit des Dienstanbieters elektronisch ein Nutzerprofil mit zumindest nutzerspezifischen Identifikationsdaten erzeugt;
b) mittels eines Endgeräts mit Kamerafunktion wird nutzerseitig elektronisch wenigstens eine Bilddatei wenigstens eines Objekts erzeugt und an die Rechnereinheit des Dienstanbieters übertragen;
c) in der Rechnereinheit des Dienstanbieters wird die wenigstens eine Bilddatei zumindest zeitweilig mit dem Nutzerprofil des Nutzers verknüpft;
d) mittels einer Bilderkennungseinrichtung, auf die die Rechnereinheit zugreift, wird die wenigstens eine Bilddatei auf ihren Inhalt analysiert;
e) die analysierten Inhalte der wenigstens einen Bilddatei werden zumindest zeitweilig im Nutzerprofil abgespeichert.

2. Verfahren nach Anspruch 1, **dadurch gekennzeichnet, dass** nutzerseitig oder anbieterseitig zusätzliche nutzerspezifische Daten erzeugt werden, die dem Nutzerprofil hinzugefügt werden.

3. Verfahren nach Anspruch 1 oder 2, **dadurch gekennzeichnet, dass** eine Bilddatei auf ihren Inhalt analysiert wird, indem mittels der Bilderkennungseinrichtung zumindest charakteristische Merkmale der Bilddatei abstrahiert werden.

4. Verfahren nach einem der Ansprüche 1 bis 3, **dadurch gekennzeichnet, dass** die zur Rechnereinheit des Dienstanbieters übertragene wenigstens eine Bilddatei mit Ortsinformationsdaten verknüpft wird, insbesondere dass nutzerseitig Ortsinformationsdaten erzeugt werden, die Ortsinformationsdaten nutzerseitig mit der Bilddatei verknüpft werden, und diese Daten an die Rechnereinheit des Dienstanbieters übertragen werden.

5. Verfahren nach Anspruch 4, **dadurch gekennzeichnet, dass** mittels eines Positionsbestimmungsverfahrens die Position des Nutzer-Endgeräts bestimmt wird, dass die Positionsdaten des Endgeräts mit der Bilddatei verknüpft werden, und dass diese Daten an die Rechnereinheit des Dienstanbieters übertragen werden.

6. Verfahren nach Anspruch 4, **dadurch gekennzeichnet, dass** die auf die Rechnereinheit des Dienstanbieters übertragene wenigstens eine Bilddatei oder abstrahierte charakteristische Merkmale der Bilddatei in der Rechnereinheit mit Referenzbilddateien oder Referenzmerkmalen, die in der Rechnereinheit abgespeichert sind, verglichen wird/werden.

7. Verfahren nach einem der Ansprüche 1 bis 6, **dadurch gekennzeichnet, dass** die nutzerseitig mittels des Endgeräts erzeugte wenigstens eine Bilddatei bei deren Erzeugung durch eine im Endgerät implementierte Zeiterfassungseinrichtung mit einer Zeitmarke verknüpft wird und dass die mit der Zeitmarke verknüpfte Bilddatei an die Rechnereinheit des Dienstanbieters übertragen wird.

8. Verfahren nach einem der Ansprüche 1 bis 7, **dadurch gekennzeichnet, dass** das Endgerät als Mobiltelefon mit Kamerafunktion ausgebildet ist und dass die wenigstens eine Bilddatei in Form einer MMS (Multimedia Messaging Service) übertragen wird.

9. Verfahren zum elektronischen Bereitstellen von Informationen über Objekte, **gekennzeichnet durch** folgende Schritte:
a) ein Nutzerprofil wird **durch** ein Verfahren gemäß einem der Ansprüche 1 bis 8 erzeugt;
b) das erzeugte Nutzerprofil wird mit in einer Datenbank des Dienstanbieters abgelegten Objektinformationen verglichen;
c) Bei Übereinstimmung von in der Datenbank abgelegten Objektinformationen mit zumindest Bestandteilen des Nutzerprofils werden die übereinstimmenden Objektinformationen dem Nutzer verfügbar gemacht.

10. Verfahren nach Anspruch 9, **dadurch gekennzeichnet, dass** die übereinstimmenden Objektinformationen von der Rechnereinheit des Dienstanbieters auf das Endgerät des Nutzers übertragen und/oder die übereinstimmenden Objektinformationen in einer dem Nutzer zugänglichen Speichereinrichtung der Rechnereinheit des Dienstanbieters abgespeichert werden.
